# EUROPEAN PATENT APPLICATION

(11) **EP 0 772 298 A1**
(43) Date of publication of application: **07.05.1997**
(21) Application number: 96401832.9
(22) Date of filing: 05.09.1996
(51) Int. Cl.: H03K 17/00, H03K 5/13, H04N 5/63

(54) **Delay circuit and method for generating a delay**

(30) Priority: 04.11.1995 GB 9522672
(71) Applicant: Thomson multimedia, 92050 Paris La Défense Cedex 66 (FR)
(72) Inventor: Yeo, Kok Seng, Singapore 1852 (SG)
(74) Representative: Brykman, Georges

(57) **Abstract**

Malfunctions of a power supply used in TV sets because of rapid switching from on to standby and back on again can be avoided by using a delay circuit, so that during the delay time, for example, a capacitor can be charged to ensure a stable voltage and the necessary electrical power. The delay circuit and the delay can be realized by using the time required for resetting a microprocessor.

## Description

This invention relates generally to a delay circuit and a method for generating a delay. More specifically, this invention relates to a circuit and a method for generating a delay to switch on a power supply with a given delay.

Electronic circuits, particularly the electronics of a TV set, are powered by a power supply. If the TV is switched quickly from on to standby and back on again, for example with a remote control unit, the problem arises that the power supply of the TV is unable to start because there is either no initial current or the initial current is too low to start the power supply. It is therefore necessary to switch on the power supply with the given delay only after the input voltage and current are stabilized.

Delay circuits and methods for generating a delay are known. For example the US 5 369 310 discloses a CMOS power-on reset circuit which has a delay capacitor to provide a predetermined delay period. Charging and discharging of the delay capacitor is controlled by the state of a flipflop circuit. This delay circuit has the disadvantage that it is realized with discrete components which makes the manufacturing of such a circuit expensive.

It is therefore an object of the invention to provide a delay circuit and a method for generating a delay in an easy and cost effective way.

This object is solved by the features of the independent claims 1 and 3.

Preferred embodiments of the invention are given in the dependent claims.

The delay circuit of this invention comprises a microprocessor means, wherein the microprocessor means is reset, thereby realizing a time delay until the microprocessor means is in processing mode.

Further said delay circuit comprises a capacitor which is charged during the reset time of the microprocessor.

Further said delay circuit comprises a power supply, especially a power supply for consumer electronic good like e.g. TV sets, video cassette recorder (VCRs), etc, wherein the power supply is controlled by the microprocessor means, so that the control signal for switching on the power supply is provided after the reset time of the microprocessor means.

Futher the method for generating a delay of this invention is characterized in that a microprocessor means is reset, thereby generating a delay until the microprocessor is in a processing mode.

Further in said method for generating a delay, a capacitor is charged during the reset time of the microprocessor means.

Finally in said method for switching on a power supply according to this invention, the power supply is switched on with a given delay time generated by the method of generating a delay.

With the use of the above delay circuit for the power supply of a TV set the power supply is only switched on with a given delay after a capacitor C, which smoothes input voltages and stores electrical charge of the power supply, is charged. The delay time of a todays standard microprocessor, which is cheap because of its mass production, is approximately 1.5 seconds. With such a delay circuit, malfunctions of a power supply can be reduced or even be avoided.

The use of the delay circuit according to the invention is not limited to power supply of consumer electronic goods, but can be used in any other electronic circuits, where a stable input voltage is needed, which is stable only after a certain time delay.

Futher advantages and objects of the invention are described in detail in the following description of a preferred embodiment with reference to the accompanying drawing, in which :

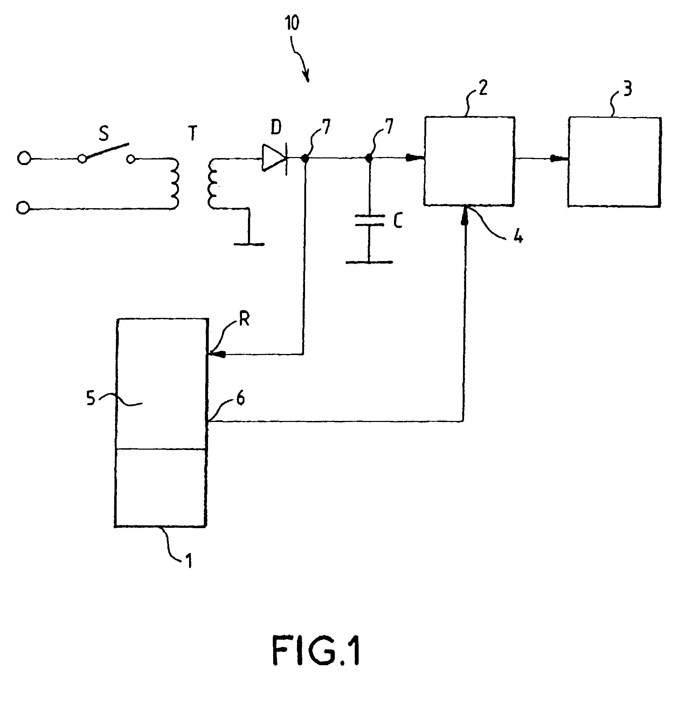

Fig. 1 shows an embodiment of a circuit schematics of a delay circuit (10) according to the invention used in a TV set.

In Fig. 1 a switch S can be opened or closed, for example, by a remote control unit to switch, for instance, a TV set from on to standby or back to on again. If the switch S is closed, line voltage is applied to transformer T to lower the voltage to the necessary value, which is then rectified by a rectifier D, for example a diode. An output 7 of the rectifier D is connected to the input (7) of a power supply 2 and to the reset input R of a reset circuit 5 of a microprocessor 1. Such reset circuit are in themselves well known. An example of such a circuit is described in the UK Patent Application n° 2255458 A, filed by Intel. The circuit described in this patent "has an input Vcc for connection with a direct current power supply voltage ..., and an output 20 for connection with at least one circuit component to be reset, for example certain components forming part of a microprocessor."

The idea of the invention is to take advantage of the presence of such a circuit in the microprocessor monitoring a TV set, or a video cassette recorder or any other electronic circuit. According to the invention the reset circuit of the microprocessor is used not only to reset the microprocessor itself, but the reset output of the microprocessor is also used to power on, in a know way the power supply circuit 2. The use for this function of a reset circuit already present in the microprocessor allows for the suppression of anyother particular devoted circuit. The power supply is simplified. This simplification results in a cost effective circuit as explained page 1.

A capacitor C is connected at connection 7 between the input line of power supply 2. An other connection of capacitor C is connected to ground. Further the power supply 2 has a power supply control input 4 connected to the microprocessor 1. The power supply 2 supplies the necessary power to further stages of a TV, indicated by the block 3.

When the switch S is closed, voltage is supplied to the reset input R of the microprocessor 1, so that the microprocessor 1 is reset, which takes approximately 1.5 seconds, depending on the type of microprocessor used. After the resetting of the microprocessor 1, a stable power supply control signal is provided to input 4 of the power supply 2, which turns the power supply 2 on. Because of the delay time of approximately 1.5 seconds the capacitor C is charged so that at the voltage input of the power supply 2, the necessary stable voltage is present together with the necessary electrical power, so that the power supply 2 can start properly.

The use of the reset time of a microprocessor 1 makes a cheap and simple circuit possible

## Claims

1. Power supply for a downstream electronic circuit (3), the power supply comprising a transformer (T) having a secondary winding feeding a rectifier circuit (D) an output (7) of said rectifier circuit being connected to a power supply circuit (2) providing currents or voltages for downstream electronic circuits (3), said power supply circuit (2) being under control of a microprocessor (1) said microprocessor (1) including a reset circuit (5) for the microprocessor (1) having an input ( R ) for connection with a direct current power supply voltage, said reset circuit (5) of the microprocessor (1) providing a reset signal on an output (6) of said reset circuit (5), after a time delay is ellapsed, power supply wherein said direct current supply of said input ( R ) of said microprocessor reset circuit (5) is connected to said output (7) of said rectifier circuit (D), said input ( R ) being also connected to a connection (7) of a capacitor ( C ) and wherein said power supply circuit (2) under control of the microprocessor (1) comprises an input (4) receiving said reset signal of said reset circuit (2) of said microprocessor (1) so that power supply circuit (2) is on after the time delay provided by the reset circuit (5) is ellapsed.

2. Consumer electronic apparatus fitted with a power supply according to claim 1.

3. Method for generating a reset delay of an electronic circuit, the electronic circuit, pertaining to an electronic apparatus including a microprocessor, said microprocessor including a reset circuit of the microprocessor, said reset circuit providing after a reset delay time a reset signal having an input to receive a direct current supply and an output delivering a reset signal the method consisting in using the reset signal provided by the reset circuit of the microprocessor to trigger the electronic circuit.

4. Method according to claim 3 wherein the reset delay is used to charge a capacitor connected to the electronic circuit.

5. Method according to claim 3 in which the electronic circuit is a power supply of a consumer electronic good.

6. Method according to claim 4 in which the electronic circuit is a power supply of a consumer electronic good.
